# EUROPEAN PATENT SPECIFICATION

(11) **EP 1 127 356 B1**
(45) Date of publication and mention of the grant of the patent: **31.08.2011**
(21) Application number: 99958389.1
(22) Date of filing: 03.12.1999
(51) Int. Cl.: H01B 1/24, C08K 3/04, H05B 3/14

(54) **CONDUCTIVE MATERIALS**
LEITFÄHIGE MATERIALEN
MATERIAUX CONDUCTEURS

(30) Priority: 04.12.1998 GB 9826596; 15.04.1999 GB 9908504
(43) Date of publication of application: 29.08.2001
(73) Proprietor: Inditherm plc, Wath-upon-Dearne, Rotherham S63 7JY (GB)
(72) Inventor: O'GRADY, Patrick James, Misson, Doncaster DN10 6ED (GB); BUCKLEY, John, Rochdale OL11 1EF (GB)
(74) Representative: Houghton, David
(86) International application number: PCT/GB1999/004087
(87) International publication number: WO 2000/034959

(56) References cited:
- EP-A- 0 344 734
- WO-A-92/04718
- WO-A-94/24678
- US-A- 5 250 228
- US-A- 5 902 518

## Description

This invention relates to conductive materials and is particularly concerned with conductive materials to serve the purpose of a heating means.

It has long been known that materials that are electrically conductive can generate heat. This phenomenon has spawned a considerable number of heating means for a considerable number of different purposes.

Whilst electrical heaters at large are generally successful, and more than capable of meeting their intended purpose, what has proved to be difficult, is the achieving of a uniform heating effect over a relatively wide area, substantially free from hot and cold spots or areas.

There have been attempts hitherto to create electrical heaters in sheet or web form to serve a wide variety of purposes. However, the most usable form of conductive material is in the form of carbon particles or carbon black embedded in or coated on a carrier or substrate. To attempt to achieve a uniform heating effect, a greater density or concentration of carbon particles is employed, but as a direct result of that, the material becomes less pliable and more brittle, to the detriment of the employment of the material over a wide range of potential uses.

The object of the present invention is to provide a flexible fabric able to serve the purpose of an electrically conductive heater.

According to the present invention, a flexible fabric able to serve the purpose of an electrically conductive heater is as defined in Claim 1.

Carbon particle levels of 20% to 40% by dry weight to 80% to 60% by dry weight of carrier levels can be used.

According to a further feature of the invention, a method of forming the flexible fabric is as is defined in Claim 4. Preferably, a quantity of finished compound is applied onto a coated release paper and further preferably, the release paper is matt graded and is an unembossed silicone-coated paper.

If required in particular applications, flame retardant materials may be provided.

Once the finished compound is prepared, it is checked by taking a sample and passing it through a 200 mesh filter, preferably with the aid of a low pressure displacement pump, and checked by using a Heckman gauge, to ensure that there has been no agglomeration of the carbon particles during mixing. If any agglomeration is detected, the mixture should be subjected to further high speed stirring.

Preferably, the finished compound is subjected to a final filtration step by passing the mixture through a 300 mesh filter cloth, for example by way of a slow, low pressure positive displacement pump, at which stage there should be no residue left on the filter cloth that would signal that there was still a degree of remnant agglomeration of carbon particles.

The flexible web or sheet of the invention ideally has a uniform coating or film of compound between 90 and 100 grams per square meter dry weight,

As the electrical conductivity, and hence the heating effect achievable is a function of coating or film thickness the above process is repeated until a desired thickness of coating or film is created.

At this stage considerable care must be exercised to ensure that reticulation is avoided, and as it is preferred to spread the finished compound by employing a doctor blade, with equally considerable care exercised to ensure the avoidance of the presence of dirt or grit on the blade edge, to prevent the creation and spread of lines of indentations in the coating or film.

Desirably, the release paper is matt grade and is an unembossed silicone-coated paper.

Such a flexible web or sheet can be of any desired length, and of any width with the limits of available fixed gap rolls.

By the nature of the coat or film, there is a substantially totally even spread of carbon black at loadings in the polymer material considerably beyond that which has hitherto been believed to be possible whilst at the same time leaving the fabric with its film or coat totally flexible.

The flexible fabric may be a knitted cotton material.

The preparation of the said compound and the manner of its application to a carrier is such that a visually smooth coating or film is provided. However, it remains so that the coating will exhibit a microscopic degree of roughness with peaks and troughs formed by carbon particles at the exposed surface. It is then important to pay special attention to the provision of an electrical connection to the coat or film.

According to yet another aspect of the invention a flexible fabric is as is defined in Claim 5. With the electrical connection installed, the sheet or web can be connected to a suitable power source with the substantial guarantee that there will be no shorting or arcing at the point of electrical connection, and consequently no damage by the creating of hot spots.

Dependant on the use to which the flexible fabric is put, an electrical connection can be provided over long lengths to opposite edges, to assist in the even input of power to the coat or film over a wide area, by locating a conductive rail on the silver loaded conductive tape. Desirably, the conductive rail is overlaid by an antifaying compound, preferably wider than the rail.

An important aspect of the invention is that the totally uniform heating effect achievable in the coat or film can be with relatively low power, eg 24 volts, and by controlling the width between the electrodes or rails, and the thickness of the coat or film, a constant temperature can be achieved and maintained, at any required level to serve a particular purpose.

An outer insulating layer can be sprayed on the flexible web or sheet to form a water/fluid resistant electrical insulator. Suitable materials may be polyurethane, silicone or acrylic elastomers. The invention has a considerable number of available uses. It can be wrapped round an article the temperature of which is to be maintained and equally can be incorporated into clothing for use in extremely cold climates, to maintain the temperature of the wearer.

However, the flexible fabric has significant benefits when used in medical contexts. It can be incorporated in a mattress or as a blanket for an operating table or for a bed in the recovery ward for raising and maintaining the temperature of patients following surgery.

It is possible to employ the flexible fabric in sleeping or carrying bags for use by rescue services to give immediate aid to accident victims suffering from hyperthermia.

In all such uses, the low voltage required means that there is total safety to the user. The voltage and coat or film thickness can determine the maximum and constant temperature across the full width and length of the fabric.

The arrangement may be that power is supplied to the electrically conductive heater until such time as its required temperature is reached and then maintained at that temperature by an appropriate switching arrangement to switch power ON and OFF as required. It is however preferred for power to be supplied as a series of pulses of predetermined time, with intervening periods where power is switched off for predetermined periods of time, to allow temperature sensing to take place. Irrespective of the form of power supply, the invention allows highly efficient use of electrical power.

In addition to being able to control maximum temperatures by voltage control by control of the spacing between electrodes and by coating thickness it is a highly advantageous feature of the invention that the predetermined maximum temperature to suit the application is achieved in reasonable time from the onset of power, after which the temperature is regulated and maintained at its predetermined level. This can be of considerable importance not only in medical contexts but also in such as the food industry and particularly in food processing where a required temperature must be achieved quickly and maintained.

One embodiment of the invention will now be described with reference to the accompanying drawings, in which:-
Figure 1 is a schematic part sectional perspective view of a mattress or blanket containing a conductive material in accordance with the invention;
Figure 2 is a schematic plan view of a mattress or blanket as in Figure 1 ;
Figures 3 is an upper and view of an electrical connection to the conductive material;
Figure 4 is an exploded perspective view of the electrical connector of Figure 3;
Figure 5 is an electrical block diagram illustrating an electrical circuit able to cause the heating of and the maintenance of a constant temperature in the conductive material; and
Figure 6 and 7 are schematic illustrations of a blanket essentially as shown in Figure 1 formed as a wrapping or a surround for a product structure or pipe;

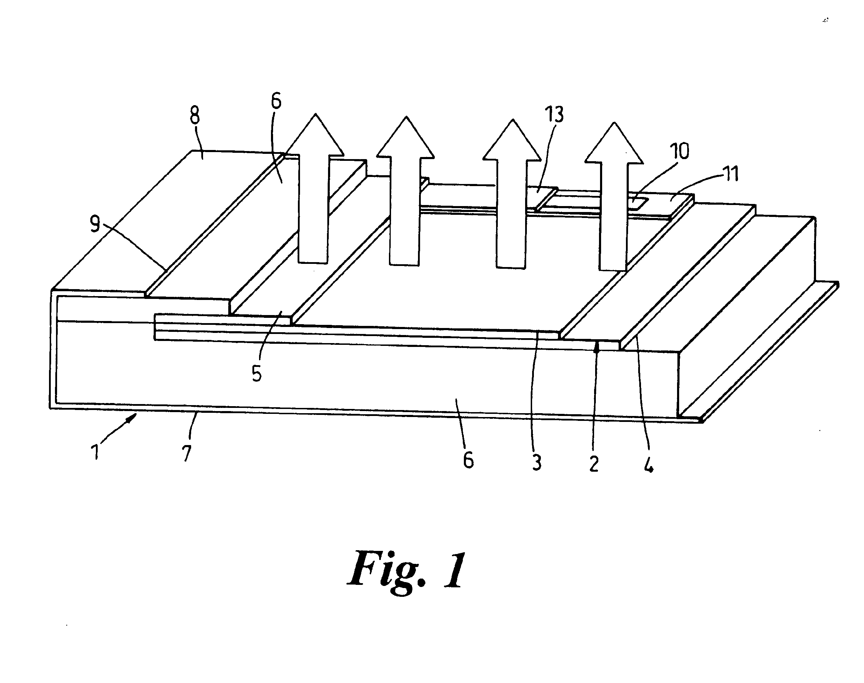

In Figure 1, a blanket or mattress 1 has a core 2 formed by conductive material 3 on a fabric support 4. The conductive material was produced by the method hereinbefore defined, and applied to the fabric layer as a series of coatings, with each coating heated to 110°C to 150°C by passing through an oven or a series of ovens before the application of a succeeding coating. For medical use, the coating can be 144 microns thick. The conductive material 3 on its fabric support 4 is overlaid by an electrical insulating layer 5, and both encased in a flame retardant insulation 6, of greater thickness to the rear or non-operative side 7 than to the front or operative side 8.

The whole composite is encased in an outer casing 9 of a polyurethane material, and the edges fully sealed around the full periphery of the blanket or mattress, to ensure that the blanket or mattress is totally waterproof, and readily cleanable and sterilisable.

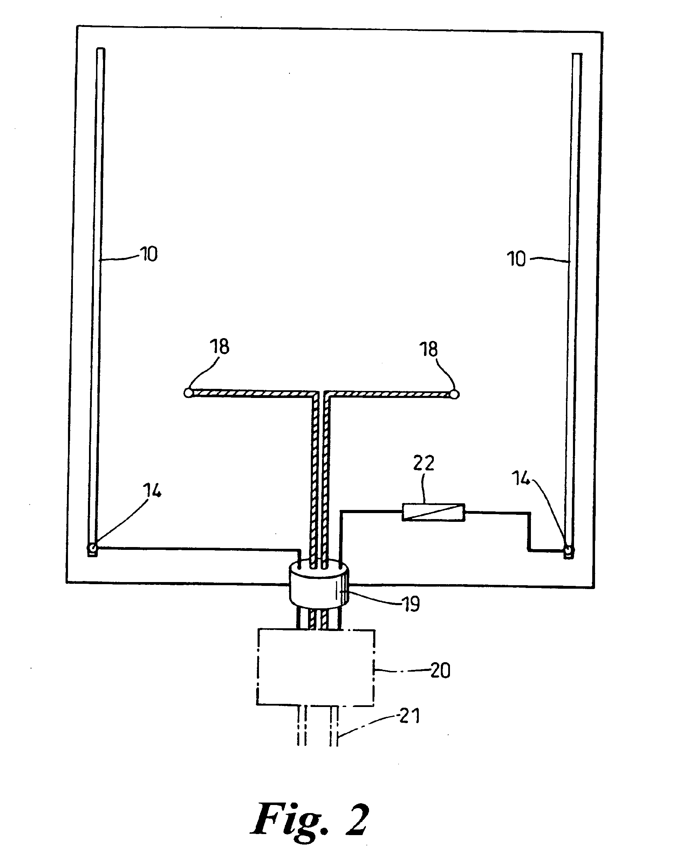

On the conductive material 3 and below the electrical insulating layer 5, is a conductive rail 10 which, as is shown more particularly by Figure 2, lies along the edges of the conductive material along its two longer lengths. For medical use, the spacing between the rails may be 460 mms.

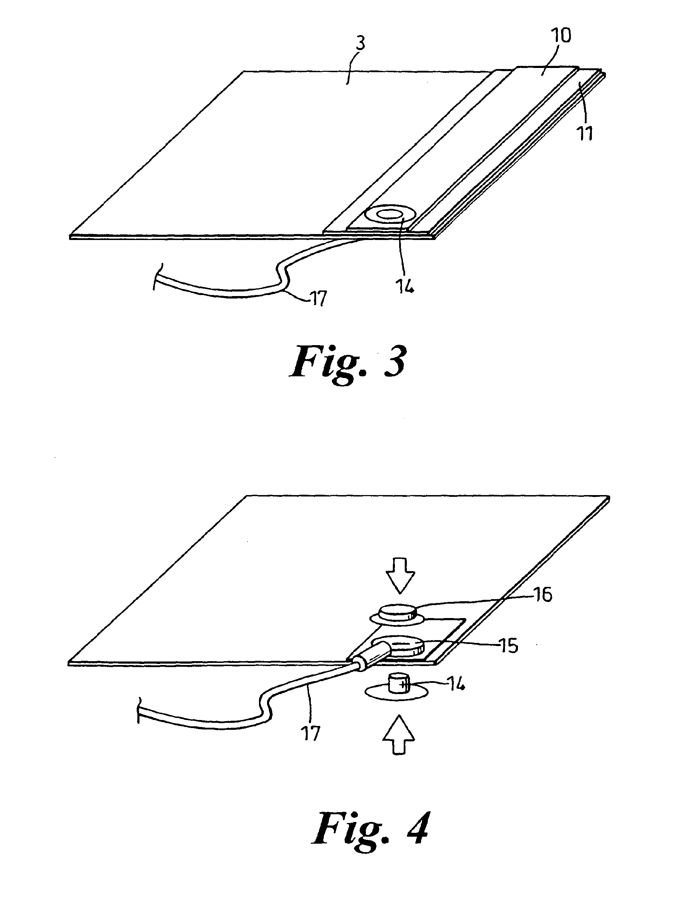

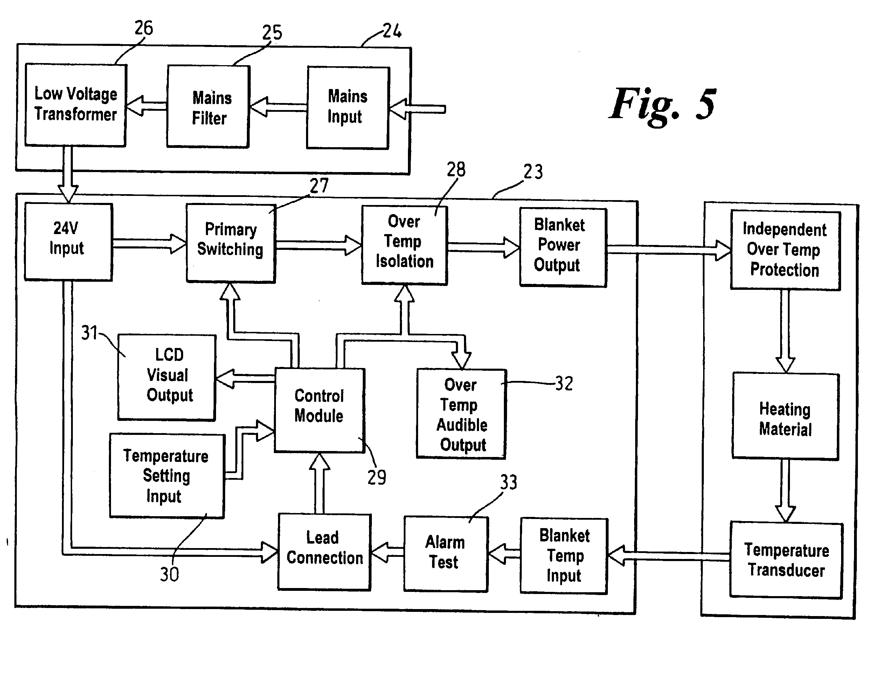

The provision of a guaranteed electrical connection to the conductive rail is of particular importance, and arcing or shorting of the electrical supply must be avoided. Of a separate significance is the supply of current to the conductive material within the blanket or mattress, and as shown in Figures 1, 3 and 4 this is achieved by applying a coating 11 of nickel over the length and width of the conductive material to be occupied by the conductive rail 10 on to which is applied a silver loaded adhesive tape 12 to which the rail 10 is attached. Overlaying the rail 10 is an antifaying compound 13 to guarantee the absence of any electrical arcing. Extending through co-operating apertures in the conductive layer, the nickel coating and the adhesive tape is a conductive stud 14 extending to a stud base 15 soldered to the rear face of the conductive material 3, the stud passing through the fabric backing to cap 16, the cap being crimped to provide a connection to an electrical lead 17. Figure 5 is an exploded view showing the connection.

As indicated in Figure 2, thermocouples or thermisters 18 chosen to suit a particular use of the blanket or mattress (thermistors for sensitive applications and thermocouples for more robust applications), are strategically located on the conductive material, with leads extending to a connection 19. As indicated in Figure 5, there is a control unit 20, from where emerge electrical leads 21 for the conductive studs 14, there being a one shot or resettable fuse 22 provided in the lead extending to one of the conductive studs 14.

The blanket or mattress discussed above is ideally suited to medical use to serve as a mattress or overlay for an operating table in a theatre or a recovery bed in a recovery room, or as a blanket to overlie a patient. Here the more sensitive thermistor would be employed to sense the temperature of the mattress overlay or blanket. As indicated in Figure 5, the mattress overlay or blanket is connected to a control unit 23 in tum connected to a transformer unit 24 that itself is connected to a mains supply. This ensures that low voltage supply, preferably at 24 volts is supplied to the mattress overlay or blanket.

Figure 5 illustrates in block diagram form the electrical circuit from the mains to the blanket or mattress. At the transformer unit 24, there is the mains input leading to a filter 25 and the low voltage transformer 26. This ensures the feeding of 24 volt supply to the control unit 23. From the inlet, power is supplied to a switching circuit 27, and then to an over temperature isolation circuit 28 from where lit progresses to a power output for connection to the mattress overlay or blanket as has been described above. Simultaneously, power is supplied to a control module 29 having a temperature control means 30 and outputs connected to a visual alarm 31 an audible alarm 32 and to the switching circuit 27. The temperature sensing thermistors (or thermocouples) 18 on the mattress overlay or blanket are connected to the control unit 23, to provide signals to the temperature isolation circuit 28 denoting temperature. An alarm test 33 is provided on the unit, the alarm test being connected to the control module, and able to simulate an over temperature condition.

Immediately prior to the onset of operations, the temperature control means is set to a temperature required of the blanket or mattress, typically average human body temperature. The transformer unit and hence the control unit and mattress overlay/blanket are connected to a mains supply, and the alarm test activated to confirm that all circuits are active.

The switching circuit is such that at the outset, power is supplied to the mattress overlay or blanket for a predetermined period of time, typically one minute and switched off for a second predetermined period of time, typically 10 seconds. During the period that power is switched off, the temperature sensed by the thermistors 18 is signalled via the control module 29 to the over temperature isolation circuit 28, and if the temperature sensed is lower than the pre-set temperature, power is repeatedly switched on and off and the temperature sensed, until the temperature of the blanket or mattress is that required. When in that condition, power is held off until a fall in temperature of the blanket or mattress is sensed.

With a patient on the mattress overlay, or wrapped in the blanket, any fall in body temperature causes an extraction of heat from the mattress or blanket, immediately sensed by the thermisters, and signals sent to the over temperature control circuit and switching circuit to cause the pulsed supply of power to recommence until such time as the temperature of the blanket or mattress recovers to the pre-set level.

By virtue of the method of producing the carbon laden material at its carbon to polymer density, and as a consequence of the manner of its application to a support fabric, there is the substantially uniform heating over the whole area of the blanket, with a substantially total elimination of hot and cold spots the result of which is that there is total support for the body heat of a patient over his or her full height and width, ensuring that body temperature control crucial to a patient during operations and subsequent recovery, is maintained.

In the most unlikely circumstances that the blanket or mattress should overheat, both the visual and audible alarms are activated, and the over temperature isolation circuit switched to prevent further power supply to the blanket or mattress. To guard against over temperature being consequent on a momentary surge of power, over temperature sensed during a first ten second switch-off of power can be caused to be ignored, and activation of the alarms and temperature isolation circuit activated only if over temperature is sensed during the second of two successive periods of switch-off of power and temperature sensing.

The above described construction of blanket or mattress and its control, whilst ideally suited to medical applications, can be used without essential changes for other more industrial uses.

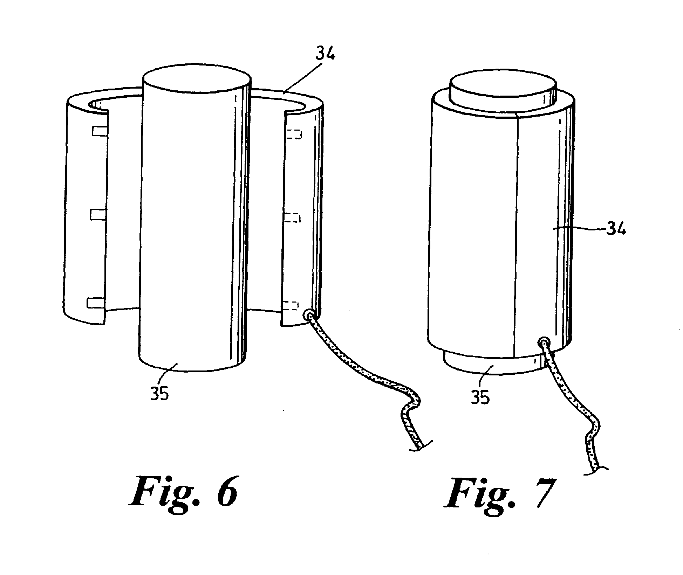

As is schematically suggested in Figures 6 and 7 a generally rectangular construction 34 of essentially the same nature as is illustrated in Figure 1 can be used to wrap round an item 35 that needs to be heated.

That item could be a domestic hot water tank, when a uniform heating effect is provided over its whole height, to the considerable benefit of the saving of power by creating a more rapid heat up from cold and a far more efficient maintenance of the temperature of water in the tank.

The item could be e.g. pipework in, e.g. the food industry where the invention can provide both an insulating lagging of pipework through which heated and fluid foodstuffs must flow and the provision of uniform heating over the full pipe work length. Not only does this have major importance during normal operations, but should there be the need to close down operations for any reasons, foodstuffs can solidify. Hitherto, solidified oil-based products in pipe lines has been a major problem. With the invention, recommencement of the provision of heat to the blanket and hence to the pipework has the effect of gently and speedily re-heating the foodstuff to bring it back to a fluid state when flow can recommence.

The item could equally be one of outdoor use in extremely cold climates such as for example valves and pumps, that can be encased in the material of the invention to maintain them at a temperature that allows them to function normally no matter what the ambient temperature might fall to.

## Claims

1. A flexible fabric able to serve the purpose of an electrical conductive heater, **characterized in that** a thin coating of a finished compound, formed by finely divided carbon black uniformly dispersed in an aliphatic polyurethane in solution with carbon black levels of 20%-75% by dry weight to 80% to 25% by dry weight of aliphatic polyurethane, the compound also containing an anti-adsorption compound selected from the group containing polypropylene glycol and polyethylene glycol, is applied directly to a flexible carrier.

2. A flexible fabric as in Claim 1, **characterised in that** the flexible fabric is a knitted cloth cotton fabric.

3. A flexible fabric as in Claim 1, **characterised in that** the fabric is a weft knitted polyvinyl alcohol fabric.

4. A method of forming a flexible fabric as in any one of Claims 1 to 3 charactarized in that a release paper is coated with the said finished compound, a further quantity of said finished compound is spread on the coating, the coated release paper is laid on the flexible fabric , and the composite passed through a fixed gap roller to ensure controlled penetration of said finished compound into the flexible fabric, the composite thereafter being subjected to heat progressively rising from 110°C to 150°C to achieve controlled release of solvents and provide a coating of said finished compound free from pinholes.

5. A flexible fabric able to serve the purpose of an electrical conductive heater as in any one of Claims 1 to 4, **characterized in that** an electrical connection is provided, said electrical connection being formed by a nickel compound sprayed on to an area of the finished compound, and a conductive rail formed by a tin-copper tape coated with a silver-loaded conductive adhesive applied to the sprayed area.

6. A flexible fabric as in Claim 5, **characterised in that** the conductive rail is overlaid by an anti-faying compound.

7. A flexible fabric as in any one of Claims 1 to 6, **characterized by** the presence of an outer insulating and water/fluid resistant layer totally encasing the flexible fabric.

8. A flexible fabric as in Claim 7, **characterized in that** the insulating and water/fluid resistant layer is a polyurethane, silicone or acrylic elastomer.

## Patentansprüche

1. Flexibles Flächengebilde, das als elektrisch leitendes Heizelement dienen kann, **dadurch gekennzeichnet, dass** eine Beschichtung aus einer fertigen Verbindung, die aus fein verteiltem Ruß gebildet ist, der gleichmäßig in einer aliphatischen Polyurethanlösung mit Rußanteilen zwischen 20 % bis 75 % und 80 % bis 25 % Prozent des Trockengewichts des aliphatischen Polyurethans dispergiert ist, wobei die Verbindung, die außerdem eine adsorptionshemmende Verbindung enthält, die aus der Gruppe ausgewählt ist, die Polypropylenglycol and Polyethylenglycol enthält, direkt auf einen flexiblen Träger aufgebracht ist.

2. Flexibles Flächengebilde nach Anspruch 1, **dadurch gekennzeichnet, dass** das flexible Flächengebilde ein Gewirk aus Baumwolle ist.

3. Flexibles Flächengebilde nach Anspruch 1, **dadurch gekennzeichnet, dass** das Flächengebilde ein Kuliergewirk aus Polyvinylalkohol ist.

4. Verfahren zum Bilden eines flexiblen Flächengebildes nach einem der Ansprüche 1 bis 3, **dadurch gekennzeichnet, dass** ein Trennpapier mit der fertigen Verbindung beschichtet wird, eine weitere Menge der fertigen Verbindung auf der Beschichtung verteilt wird, das beschichtete Trennpapier auf das flexible Flächengebilde gelegt wird und die Verbundstruktur durch einen feststehenden Walzenspalt geführt wird, um ein kontrolliertes Eindringen der fertigen Verbindung in das flexible Flächengebilde zu gewährleisten, wobei die Verbundstruktur nachfolgend einer Wärme ausgesetzt wird, die von 110°C progressiv auf 150°C ansteigt, um eine kontrollierte Freisetzung von Lösemitteln zu erreichen und eine Beschichtung aus der fertigen Verbindung bereitzustellen, die frei von Poren ist.

5. Flexibles Flächengebilde , das als elektrisch leitendes Heizelement dienen kann, nach einem der Ansprüche 1 bis 4, **dadurch gekennzeichnet, dass** eine elektrische Verbindung bereitgestellt ist, wobei die elektrische Verbindung durch eine Nickelverbindung, die auf einen Bereich der fertigen Verbindung gesprüht ist, und eine leitende Schiene gebildet ist, die durch einen Zinn-Kupfer-Streifen gebildet ist, der mit einem silberhaltigen leitfähigen Klebstoff beschichtet ist, welcher auf den gesprühten Bereich aufgetragen ist.

6. Flexibles Flächengebilde nach Anspruch 5, **dadurch gekennzeichnet, dass** die leitfähige Schiene von einer isolierenden Verbindung überzogen ist.

7. Flexibles Flächengebilde nach einem der Ansprüche 5 bis 6, **gekennzeichnet durch** das Vorhandensein einer äußeren isolierenden und wasser-/fluidfesten Schicht, welche das flexible Flächengebilde vollständig umschließt.

8. Flexibles Flächengebilde nach Anspruch 7, **dadurch gekennzeichnet, dass** die isolierende und wasser-/fluidfeste Schicht ein Polyurethan-, Silikon- oder Acryl-Elastomer ist.

## Revendications

1. Etoffe flexible pouvant assurer la fonction de chauffage conducteur électrique, **caractérisée en ce qu'**un revêtement d'un composé fini, formé par du noir de carbone finement divisé dispersé uniformément dans un poly(uréthane) aliphatique en solution avec des taux de noir de carbone de 20 % à 75 % en poids sec à 80 % à 25 % en poids sec de poly(uréthane) aliphatique, le composé contenant également un composé anti-adsorption choisi dans le groupe contenant le poly(propylène glycol) et le poly(éthylène glycol), est appliqué directement sur un support flexible.

2. Etoffe flexible selon la revendication 1, **caractérisée en ce que** l'étoffe flexible est un tricot de coton.

3. Etoffe flexible selon la revendication 1, **caractérisée en ce que** l'étoffe est un tricot de poly(alcool de vinyle) à mailles cueillies.

4. Procédé de formation d'une étoffe flexible selon l'une quelconque des revendications 1 à 3, **caractérisé en ce que** l'on revêt un intercalaire avec ledit composé fini, que l'on étale une quantité supplémentaire dudit composé fini sur le revêtement, que l'on pose l'intercalaire revêtu sur l'étoffe flexible, et que l'on fait passer le composite à travers un rouleau d'espacement fixe pour assurer une pénétration maîtrisée dudit composé fini dans l'étoffe flexible, le composite étant par la suite soumis à de la chaleur s'élevant progressivement de 110 °C à 150 °C pour atteindre une libération maîtrisée des solvants et former un revêtement dudit composé fini dépourvu de trous d'épingles.

5. Etoffe flexible pouvant assurer la fonction de chauffage conducteur électrique selon l'une quelconque des revendications 1 à 4, **caractérisée en ce qu'**une connexion électrique est prévue, ladite connexion électrique étant formée par un composé de nickel pulvérisé sur une zone du composé fini, et un rail conducteur formé par une bande en étain-cuivre revêtue avec un adhésif conducteur chargé d'argent appliqué sur la zone pulvérisée.

6. Etoffe flexible selon la revendication 5, **caractérisée en ce que** le rail conducteur est recouvert par un composé anti-contact.

7. Etoffe flexible selon l'une quelconque des revendications 1 à 6, **caractérisée par** la présence d'une couche isolante externe et résistante à l'eau/aux fluides recouvrant totalement l'étoffe flexible.

8. Etoffe flexible selon la revendication 7, **caractérisée en ce que** la couche isolante et résistante à l'eau/aux fluides est un élastomère de poly(uréthane), de silicone ou d'acrylique.
